# EUROPEAN PATENT APPLICATION

(11) **EP 1 840 526 A2**
(43) Date of publication of application: **03.10.2007**
(21) Application number: 06119266.2
(22) Date of filing: 21.08.2006
(51) Int. Cl.: G01D 3/02, G01D 3/036, G01D 18/00

(54) **Temperature characteristic correction method and sensor amplification circuit**

(30) Priority: 28.03.2006 JP 2006088449
(71) Applicant: FUJITSU LIMITED, Kawasaki-shi, Kanagawa 211-8588 (JP)
(72) Inventor: AOKI, Koju, Kasugai-shi Aichi 487-0013 (JP); OKAJIMA, Takuya, Kasugai-shi Aichi 487-0013 (JP); WATAI, Takahiro, Kasugai-shi Aichi 487-0013 (JP); MIZUTANI, Masaya, Kasugai-shi Aichi 487-0013 (JP); SAKIMA, Hiroyuki, Kasugai-shi Aichi 487-0013 (JP)
(74) Representative: Seeger, Wolfgang

(57) **Abstract**

A temperature characteristic correction method enabling easy setting of correction points, while reducing deviations of an output signal from a target value and preventing power supply noise and power consumption from increasing. The method includes storing correction patterns, each of which includes correction points set at a temperature interval that differs between the correction patterns. The method further includes storing correction data for each correction point in each correction pattern, selecting a correction pattern corresponding to the temperature dependent characteristic of the input signal from the correction patterns, and correcting the temperature dependent characteristic of the input signal with the selected correction pattern and the correction data corresponding to the selected correction pattern.

## Description

The present invention relates to an amplification circuit for detecting and amplifying an output signal of a sensor, such as an angular velocity sensor or an acceleration sensor.

Sensors have been miniaturized over recent years and have finer output signals. Such a sensor requires an amplification circuit for detecting and amplifying sensor output. Output signals from the sensor and the amplification circuit are dependent on temperature. Thus, the amplification circuit is required to correct such temperature dependent characteristics. Accordingly, there is a need for performing such a correction process accurately and easily.

In the prior art, a digital correction process and an analog correction process have been put into practice as a process performed by the sensor amplification circuit to correct the temperature dependent characteristic of a sensor output. The digital correction process uses correction data prestored for every predetermined temperature step in a storage means. Correction data corresponding to an ambient temperature is read from the memory device when the ambient temperature changes. Then, the read correction data is used to correct an output signal of the sensor amplification circuit.

In the analog correction process, when the temperature dependent characteristic of the sensor output has a predetermined gradient, a gradient is set for the temperature characteristic of the amplification circuit to offset the predetermined gradient of the temperature characteristic of the sensor output. When the sensor output changes along a curve with respect to temperature changes, the gradient of the temperature dependent characteristic of the amplification circuit is switched in accordance with the temperature. In this way, the curve is approximated using a plurality of straight lines to correct the output signal of the sensor amplification circuit.

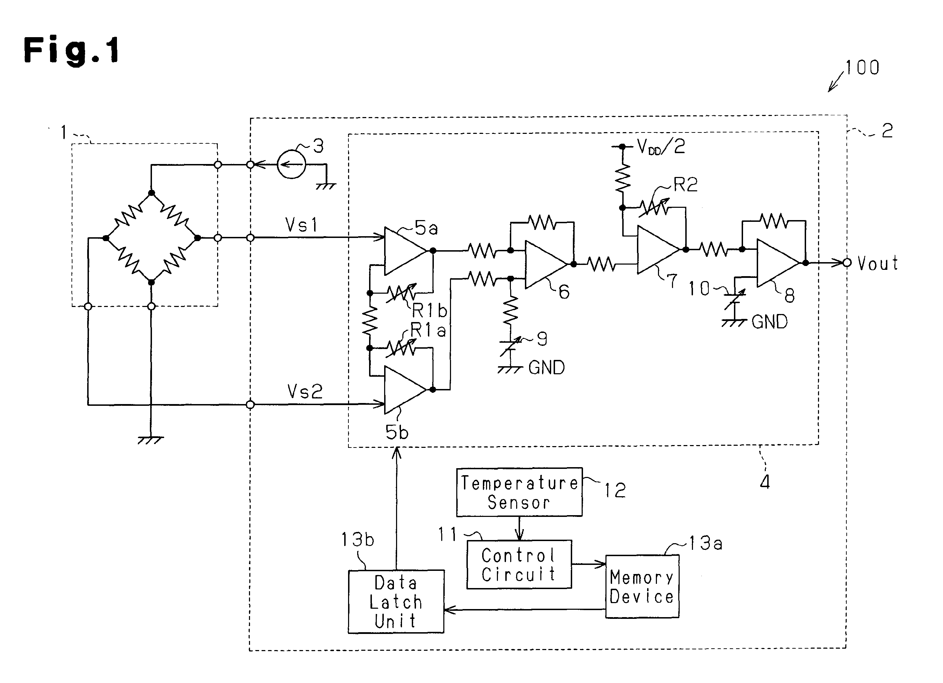

Fig. 1 shows a sensor amplification circuit 100 including a digital correction circuit for digitally correcting the temperature dependent characteristic of a sensor output. A bridge type sensor 1 is supplied with constant current from a current source 3 included in an IC chip 2. Output voltages Vs1 and Vs2 of the sensor 1 are applied to an amplification circuit unit 4 included in the IC chip 2.

The amplification circuit unit 4 includes input-stage amplifiers 5a and 5b for receiving the output voltages Vs1 and Vs2 of the sensor 1, an amplifier 6 for amplifying the difference between output voltages of the input-stage amplifiers 5a and 5b, an amplifier 7 for amplifying an output signal of the amplifier 6, and an output-stage amplifier 8 for amplifying an output voltage of the amplifier 7 and generating an output signal Vout.

The input-stage amplifiers 5a and 5b include feedback resistors R1a and R1b, which are variable resistors. The resistances of the feedback resistors R1a and R1b are adjusted to adjust the gain of the amplification circuit unit 4. The amplifier 6 includes an input terminal connected to ground GND via a voltage adjustment circuit 9. The voltage adjustment circuit 9 is adjusted to adjust the offset voltage of the amplification circuit unit 4.

The amplifier 7 includes a feedback resistor R2, which is a variable resistor. The resistance of the feedback resistor R2 is adjusted to adjust the gain of the amplification circuit unit 4. The output-stage amplifier 8 includes an input terminal connected to a ground GND via a voltage adjustment circuit 10. The voltage adjustment circuit 10 is adjusted to adjust the offset voltage of the amplification circuit unit 4.

Although not shown in Fig. 1, each of the resistors R1a, R1b, and R2 includes a plurality of resistors connected in series and a plurality of switches respectively connected in parallel to the resistors. Each of the switches is switched to adjust the resistance of each of the resistors R1a, R1b, and R2 in steps. In the same manner, each of the voltage adjustment circuits 9 and 10 includes a plurality of resistors connected in series and a plurality of switches respectively connected in parallel to the resistors. Each of the switches is switched to adjust in steps the voltage value of each of the voltage adjustment circuits 9 and 10.

The amplification circuit unit 4 digitally corrects the temperature characteristic of the sensor 1 in accordance with the operation of a control circuit 11 to generate a corrected output signal Vout. The control circuit 11 is connected to a temperature sensor 12 and a memory device 13a. The temperature sensor 12 detects the ambient temperature. The memory device 13a prestores correction data corresponding to each temperature for adjusting the resistances of the resistors R1a, R1b, and R2 and the voltage adjustment circuits 9 and 10. The control circuit 11 reads correction data corresponding to the ambient temperature from the memory device 13a based on a detection signal of the temperature sensor 12, converts the read correction data into control data for adjusting the resistances, and stores the control data into a data latch unit 13b. The resistances of the resistors R1a, R1b, and R2 and the voltage adjustment circuits 9 and 10 are adjusted based on the control data stored in the data latch unit 13b.

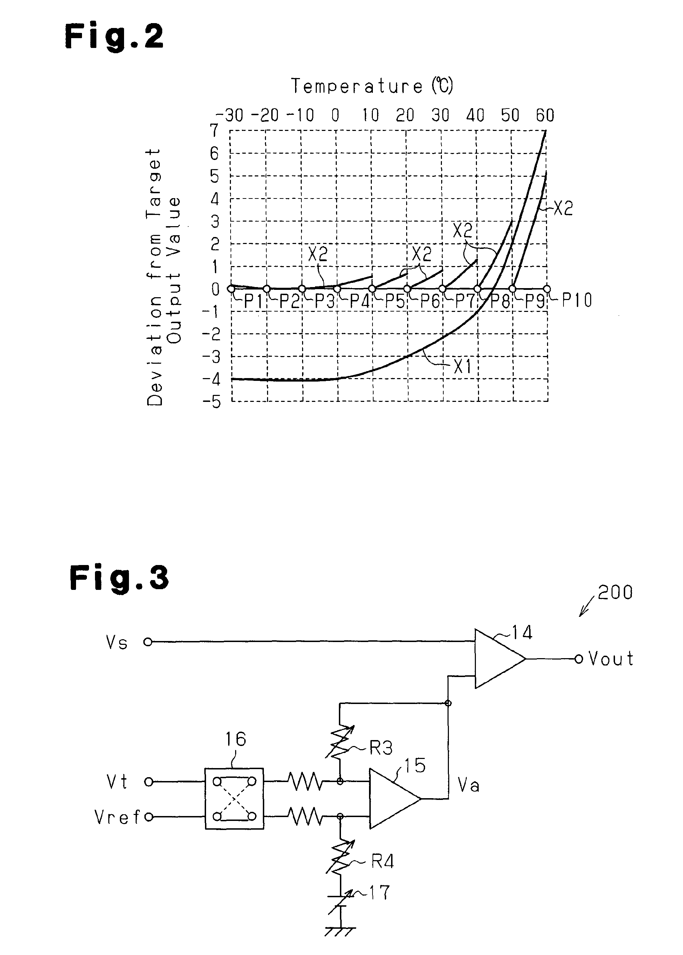

Fig. 2 is a graph showing the correction operation for the temperature dependent characteristic performed by the sensor amplification circuit 100. Characteristic curve X1 shown in Fig. 2 indicates the level of an output signal of the amplification circuit unit 4 when the correction operation is not performed. As shown in Fig. 2, the characteristic curve X1 indicates a higher output level for a higher temperature. It is preferable that the characteristic curve X1 be corrected in a manner that the temperature characteristic be flat at a predetermined target value (zero level in Fig. 2) with no temperature dependency. That is, it is preferable that the temperature characteristic be expressed by a straight line having a zero-gradient and intersecting with the vertical axis at the predetermined target value.

In Fig. 2, characteristic curve X2 indicates the level of an output signal of the amplification circuit unit 4 obtained through the temperature dependent characteristic correction performed by the amplification circuit unit 4 based on the operation of the control circuit 11. The characteristic curve X2 indicates the level of an output signal obtained by adjusting the resistances of the resistors R1a, R1b, and R2 and the voltage adjustment circuits 9 and 10 in the amplification circuit unit 4 at intervals of 10°C.

As shown in Fig. 2, the characteristic curve X2 indicates that the level of the output signal converges on its target value at each of correction points P1 to P10, which are set at intervals of 10°C. However, the characteristic curve X2 deviates from the target value between the correction points. The deviations occur along the temperature dependent characteristic expressed using the characteristic curve X1. Thus, the characteristic curve X2 is not a straight line having a zero-gradient but is a curve indicating that the level of the output signal changes in a sawtooth-like manner depending on the temperature.

Fig. 3 shows a sensor amplification circuit 200 including an analog correction circuit for performing analog correction of a temperature dependent characteristic of a sensor output. An output-stage amplifier 14 has a first input terminal for receiving a sensor output Vs, which is similar to the output voltage of the sensor 1 shown in Fig. 1, and a second input terminal for receiving output voltage Va of an analog correction amplifier 15.

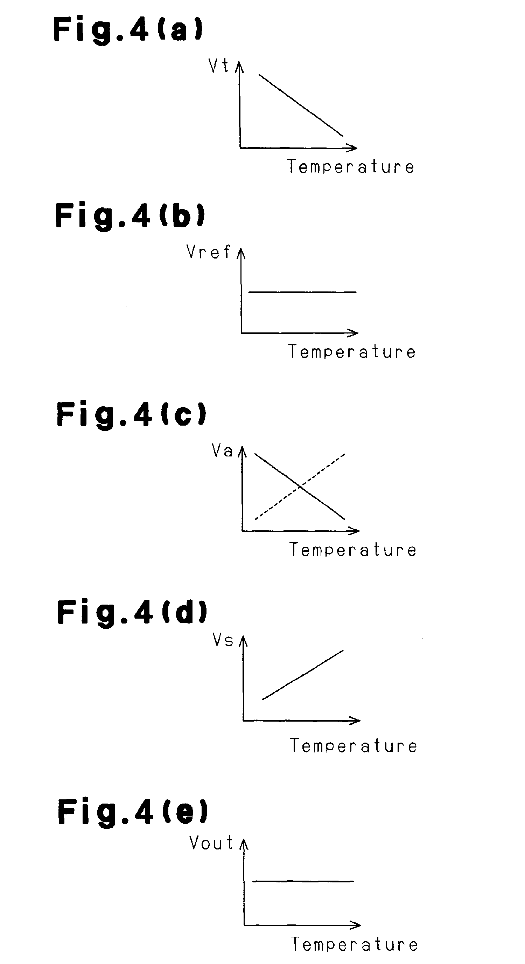

Voltage Vt having a temperature dependent characteristic as shown in Fig. 4(a) and reference voltage Vref that is not temperature-dependent and is constant as shown in Fig. 4(b) are respectively applied to the two input terminals of the analog correction amplifier 15 via a switch circuit 16. The voltage Vt is generated by a forward voltage at a PN junction of a transistor or a diode, and has a temperature dependent characteristic. Further, the voltage Vt changes linearly with respect to temperature changes at a gradient of, for example, - 2 mV/°C. The reference voltage Vref is generated using a bandgap reference voltage.

The switch circuit 16 switches the voltage Vt and the reference voltage Vref respectively applied to the two input terminals of the analog correction amplifier 15. The switch circuit 16 either applies the voltage Vt to the first input terminal and the reference voltage Vref to the second input terminal or the reference voltage Vref to the first input terminal and the voltage Vt to the second input terminal.

A feedback resistor R3, which is a variable resistor, is connected between the first input terminal and output terminal of the analog correction amplifier 15. A variable resistor R4 and a voltage adjustment circuit 17 are connected between the second input terminal of the analog correction amplifier 15 and ground GND.

In the same manner as the resistors R1a, R1b, and R2 and the voltage adjustment circuits 9 and 10 shown in Fig. 1, each of the resistors R3 and R4 and the voltage adjustment circuit 17 includes a plurality of resistors connected in series and a plurality of switches respectively connected in parallel to the resistors. Each of the switches is switched to adjust the resistances of the resistors R3 and R4 or the voltage value of the voltage adjustment circuit 17 in steps.

The analog correction amplifier 15 outputs the output voltage Va that changes linearly based on changes in the ambient temperature shown in Fig. 4(c). The switch circuit 16 selects whether the output voltage Va is to increase or decrease when the ambient temperature increases. The gradient of the output voltage Va is adjusted by adjusting the resistances of the resistors R3 and R4. Further, the offset voltage of the output signal Vout of the output-stage amplifier 14 is adjusted by adjusting the voltage value of the voltage adjustment circuit 17.

As shown in Fig. 4(d), when the sensor output Vs changes linearly with respect to the ambient temperature, the gradient of the output voltage Va of the analog correction amplifier 15 is set to offset the gradient of the sensor output Vs. As a result, the output signal Vout that is not temperature-dependent as shown in Fig. 4(e) is output from the output-stage amplifier 14.

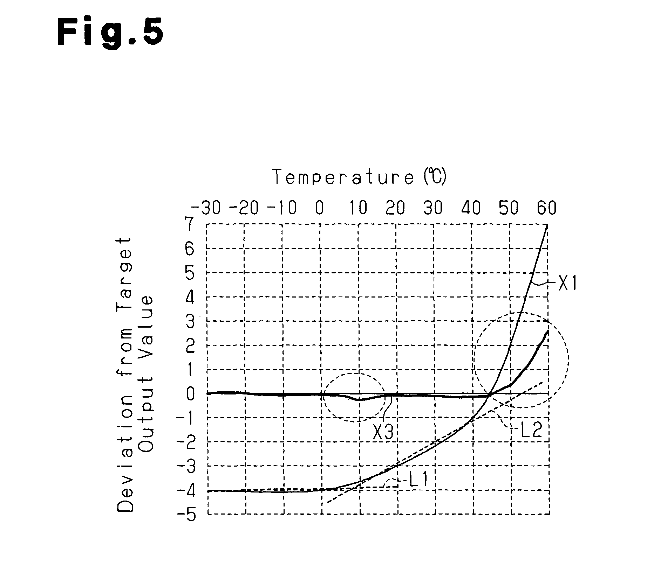

Fig. 5 is a graph showing the correction operation of the temperature dependent characteristic actually performed by the sensor amplification circuit 200 including the analog correction amplifier 15. The characteristic curve X1 shown in Fig. 5 indicates the level of an output signal of the output-stage amplifier 14 when the correction operation is not performed. As shown in Fig. 5, the characteristic curve X1 is corrected so as to obtain a temperature characteristic expressed by a characteristic curve, which is flat at a predetermined target value with no temperature dependency. To enable such correction, the characteristic curve X1 is first approximated using two straight lines L1 and L2. The resistances of the resistors R3 and R4 and the voltage adjustment circuit 17 are selected in a manner to offset the gradients and the offset values of the straight lines L1 and L2. For example, the resistances of the resistors R3 and R4 are selected in a manner to cause switching between the straight lines L1 and L2 at 10°C.

In Fig. 5, the characteristic curve X3 indicates the temperature dependent characteristic that has been corrected via the analog correction process. As shown in Fig. 5, the characteristic curve X3 is substantially flat near the target output value. However, the characteristic curve X3 deviates from the target output value in the vicinity of 10°C at which the switching between the approximate straight lines L1 and L2 occurs. Accordingly, an accurately flat temperature characteristic cannot be obtained.

Japanese Laid-Open Patent Publication No. 2003-84728 describes a voltage generation circuit that includes a circuit for performing temperature compensation through analog control and a circuit for performing temperature compensation through digital control. The voltage generation circuit switches between analog control and digital control in accordance with the temperature region.

Japanese Laid-Open Patent Publication No. 11-64123 describes a bridge circuit that includes a compensation resistor for performing rough compensation and a compensation unit for generating a finely compensated digital overvoltage.

Japanese Laid-Open Patent Publication No. 11-194061 describes a structure for performing temperature compensation in a sensor drive circuit with a digital compensation means.

Japanese Laid-Open Patent Publication No. 2001-143183 describes a structure similar to the analog correction amplifier shown in Fig. 3.

The characteristic curve X2 digitally corrected by the sensor amplification circuit 100 shown in Figs. 1 and 2 converges on the target output value at the correction points P1 to P10 that are set at intervals of 10°C but deviates from the target output value between the correction points. The deviations occur along the temperature dependent characteristic expressed by the characteristic curve X1 of the sensor 1. Thus, the characteristic curve X2 is not a straight line having a zero-gradient but is a curve that changes in a sawtooth-like manner depending on temperatures.

The sawtooth deviations from the target output value may be reduced by increasing the correction points. However, an increase in the number of correction points increases the amount of data to be stored in the memory device 13a. As a result, the number of times correction data corresponding to each temperature region is read from the memory device 13a increases, and the number of times the resistances are changed in the sensor amplification circuit 100 increases. This increases power supply noise and power consumption of the sensor amplification circuit 100.

The characteristic curve X3 obtained through analog correction by the sensor amplification circuit 200 shown in Figs. 3 and 5 deviates from the target output value at temperatures at which the characteristic curve X1 deviates from the approximate straight lines L1 and L2. The deviations from the target output value may be reduced by increasing approximate lines. However, an increase in the number of approximate straight lines increases the number of times the resistances of the resistors R3 and R4 are changed to switch the approximate straight line gradient. This increases power supply noise and power consumption of the sensor amplification circuit 200.

The above publications all fail to describe a structure that performs both digital correction and analog correction to reduce deviations of an output signal from a target output value while preventing power supply noise and power consumption from increasing.

The present invention provides a sensor amplification circuit enabling easy setting of correction points while reducing deviations of an output signal from a target output value and preventing power supply noise and power consumption from increasing.

One aspect of the present invention is a method for correcting a temperature dependent characteristic of an input signal. The method includes storing a plurality of correction patterns, each including a plurality of correction points set at a temperature interval that differs between the correction patterns. Further, the method includes storing correction data for each of the correction points in each of the correction patterns, selecting a correction pattern corresponding to the temperature dependent characteristic of the input signal from the plurality of correction patterns, and correcting the temperature dependent characteristic of the input signal with the selected correction pattern and the correction data corresponding to the selected correction pattern.

A further aspect of the present invention is an amplification circuit for a sensor. The amplification circuit includes a memory device for storing a plurality of correction patterns set in accordance with various temperature dependent characteristics of an input signal. Each of the correction patterns includes a plurality of correction points set at a temperature interval that differs between the correction patterns. The memory device further stores correction data for each of the correction points. A correction circuit corrects the temperature dependent characteristic of the input signal with the correction data for each of the correction points in the correction patterns. A temperature sensor detects ambient temperature. A control circuit for operating the correction circuit based on the correction pattern and correction data corresponding to the ambient temperature detected by the temperature sensor.

Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a schematic circuit diagram showing a sensor amplification circuit in the prior art;
Fig. 2 is a graph showing a correction operation for correcting a temperature dependent characteristic performed by the prior art sensor amplification circuit;
Fig. 3 is a schematic circuit diagram showing a sensor amplification circuit in the prior art;
Figs. 4(a) to 4(e) are graphs showing various temperature dependent characteristics;
Fig. 5 is a graph showing a correction operation for correcting a temperature dependent characteristic performed by a sensor amplification circuit in the prior art;
Fig. 6 is a schematic circuit diagram showing a sensor amplification circuit according to a first embodiment of the present invention;
Fig. 7 is a schematic block diagram showing a control unit of the sensor amplification circuit in the first embodiment;
Fig. 8 is a table showing a correction pattern map;
Fig. 9 is a table showing a correction pattern map;
Fig. 10 is a graph showing a correction pattern in the first embodiment;
Fig. 11 is a graph showing another correction pattern in the first embodiment;
Fig. 12 is a graph showing a further correction pattern in the first embodiment;
Fig. 13 is a graph showing a correction operation of the sensor amplification circuit in the first embodiment;
Fig. 14 is a graph showing a correction pattern according to a second embodiment of the present invention; and
Fig. 15 is a graph showing a correction pattern according to a third embodiment of the present invention.

In the drawings, like numerals are used for like elements throughout.

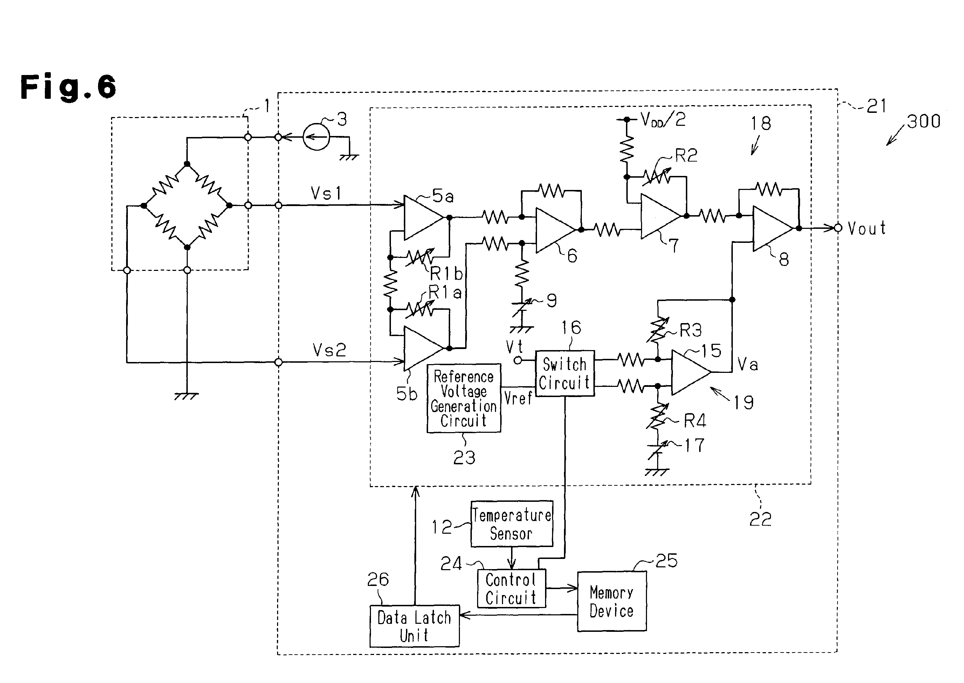

Fig. 6 shows a sensor amplification circuit 300 including a digital correction circuit 18 for performing digital correction on a temperature dependent characteristic of a sensor output and an analog correction circuit 19 for performing analog correction on a temperature dependent characteristic of a sensor output.

A bridge type sensor 1 is supplied with a constant current from a current source 3 included in an IC chip 21. Output voltages Vs1 and Vs2 of the sensor 1 are applied to an amplification circuit unit 22 in the IC chip 21.

The amplification circuit unit 22 includes input-stage amplifiers 5a and 5b for receiving the output voltages Vs1 and Vs2 of the sensor 1, an amplifier 6 for amplifying the difference between output voltages of the input-stage amplifiers 5a and 5b, an amplifier 7 for amplifying an output signal of the amplifier 6, and an output-stage amplifier 8 for amplifying an output voltage of the amplifier 7 to generate an output signal Vout.

The input-stage amplifiers 5a and 5b include feedback resistors R1a and R1b, which are variable resistors. The resistances of the feedback resistors R1a and R1b are adjusted to adjust the gain of the amplification circuit unit 22. The amplifier 6 includes an input terminal connected to ground GND via a voltage adjustment circuit 9. The voltage adjustment circuit 9 is adjusted to adjust the offset voltage of the amplification circuit unit 22.

The amplifier 7 includes a feedback resistor R2, which is a variable resistor. The resistance of the feedback resistor R2 is adjusted to adjust the gain of the amplification circuit unit 22.

The output-stage amplifier 8 receives an output signal of the amplifier 7 and an output voltage Va of an analog correction amplifier 15 to generate an output signal Vout based on the input signals.

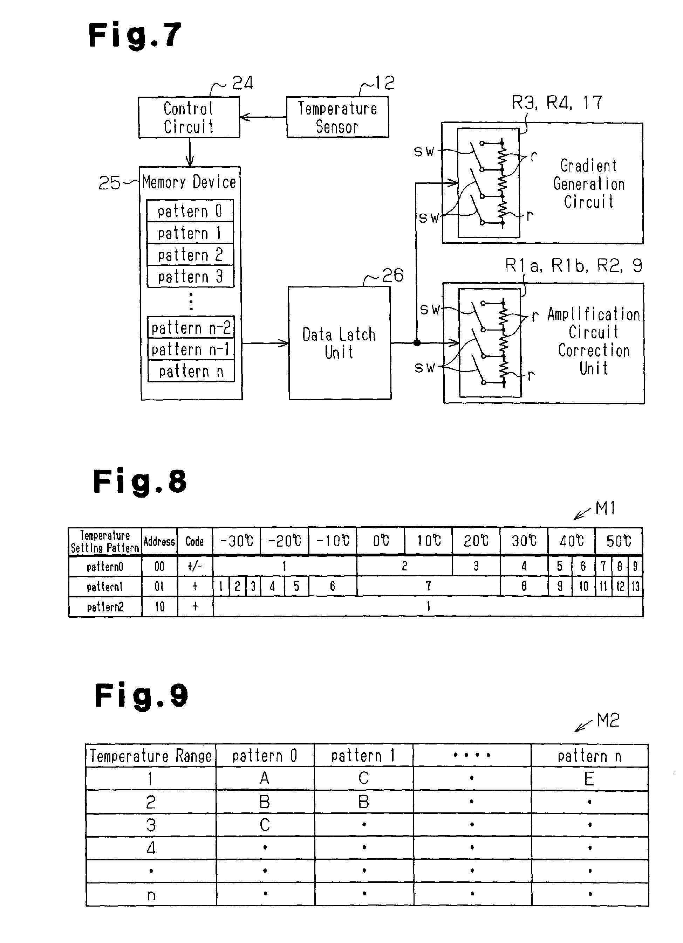

As shown in Fig. 7, each of the feedback resistors R1a, R1b, and R2 and the voltage adjustment circuit 9 includes a plurality of resistors r connected in series and a plurality of switches sw respectively connected in parallel to the resistors. Each of the switches sw is switched to adjust in steps the resistance of each of the resistors R1a and R1b or the voltage value of the voltage adjustment circuit 9.

Voltage Vt, which has a temperature dependent characteristic, and a reference voltage Vref, which is not temperature-dependent and is constant, are respectively applied to the two input terminals of the analog correction amplifier 15 via a switch circuit 16. The voltage Vt is generated from a forward voltage at a PN junction of a transistor or a diode and has a temperature dependent characteristic that linearly changes the voltage with respect to temperature changes at a gradient of, for example, - 2 mV/°C. The reference voltage Vref is generated by a reference voltage generation circuit 23 using, for example, a bandgap reference voltage.

The switch circuit 16 switches the voltage Vt and the reference voltage Vref applied to the two input terminals of the analog correction amplifier 15. More specifically, the switch circuit 16 either applies the voltage Vt to the first input terminal and the reference voltage Vref to the second input terminal or the reference voltage Vref to the first input terminal and the voltage Vt to the second input terminal.

A feedback resistor R3, which is a variable resistor, is connected between an output terminal and the first input terminal of the analog correction amplifier 15. A variable resistor R4 and a voltage adjustment circuit 17 are connected between the second input terminal of the analog correction amplifier 15 and ground GND.

As shown in Fig. 7, each of the resistors R3 and R4 and the voltage adjustment circuit 17 includes a plurality of resistors r connected in series and a plurality of switches sw respectively connected in parallel to the resistors. Each of the switches sw is switched to adjust in steps the resistance of each of the resistors R3 and R4 or the voltage value of the voltage adjustment circuit 17.

The amplification circuit unit 22 generates the output signal Vout obtained through digital correction and analog correction of the temperature characteristic of the sensor 1 in accordance with the operation of a control circuit 24. The control circuit 24 is connected to a temperature sensor 12 and a memory device 25. The temperature sensor 12 detects the ambient temperature. As shown in Fig. 7, the memory device 25 prestores a large number of correction patterns 0 to n, which are used to correct the resistances of the resistors R1a, R1b, and R2 and the voltage adjustment circuit 9.

The control circuit 24 stores control data for adjusting the resistances in the amplification circuit unit 22 in a data latch unit 26 based on a pre-selected one of the correction patterns 0 to n and a detection signal of the temperature sensor 12. The control data stored in the data latch unit 26 is then used to adjust the resistances of the resistors R1a, R1b, R2, R3, and R4 and the voltage adjustment circuits 9 and 17.

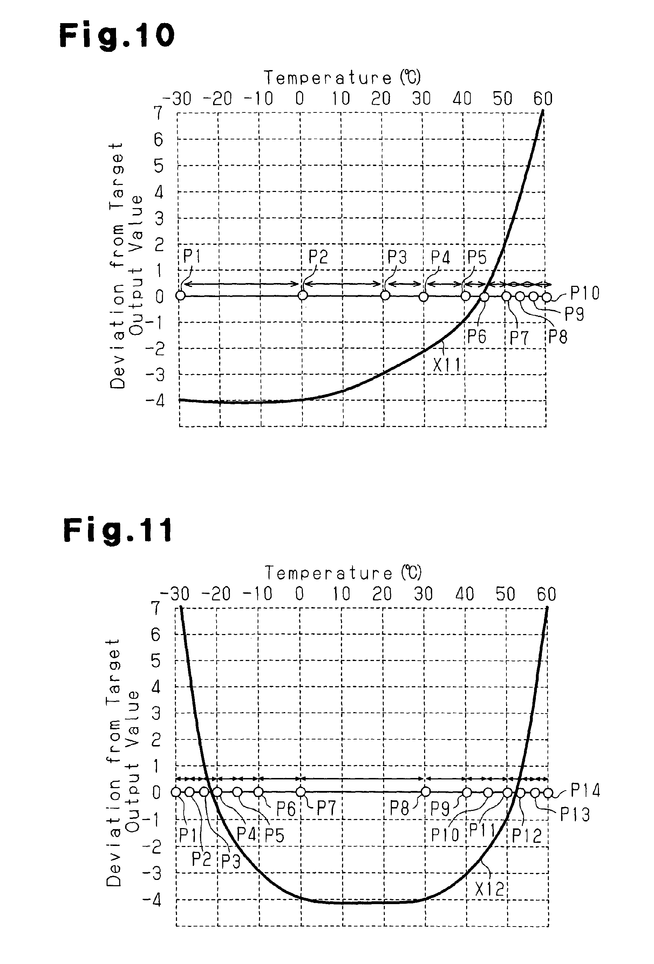

Fig. 8 shows an example of a correction pattern map (first correction pattern map) M1 stored in the memory device 25. The correction pattern 0 corresponds to the characteristic curve X11 shown in Fig. 10. The characteristic curve X11 has a gradient that becomes steeper at higher temperatures. In the pattern 0, the temperature interval between the correction points P1 to P10 is narrowed as the temperature becomes higher. In Fig. 10, the temperature range of - 30 to 60°C is divided into temperature regions 1 to 9, and correction points P1 to P10 are set at the boundaries of these regions.

Further, the memory device 25 prestores correction data for correcting the output signal Vout to its target value at each of the correction points P1 to P10. The memory device 25 also stores gradient data that is set to offset the gradient of the characteristic curve X11 in each of the temperature regions.

Fig. 9 shows a gradient data selection map (second correction pattern map) M2 that is stored in the memory device 25. The gradient data selection map M2 sets gradient data A, B, C, etc. for the temperature regions 1 to 9 of the correction pattern 0. The gradient data associates a greater gradient with a temperature region having a narrower temperature interval.

In Fig. 8, the correction pattern 1 corresponds to the characteristic curve X12 shown in Fig. 11. The characteristic curve X12 has a gradient that becomes steeper at low and high temperatures in the temperature range of - 30 to 60°C. The characteristic curve X12 has a negative gradient in the low-temperature portion of the temperature range. The characteristic curve X12 has a positive gradient in the high-temperature portion of the temperature range. In Fig. 11, the temperature range of - 30 to 60°C is divided into temperature regions 1 to 13, and correction points P1 to P14 are set at the boundaries of these regions.

In the pattern 1, the temperature interval between the correction points P1 to P14 narrows in the low-temperature portion and the high-temperature portion. The correction pattern map M2 sets gradient data C, B, etc. for the temperature regions 1 to 13 of the correction pattern 1.

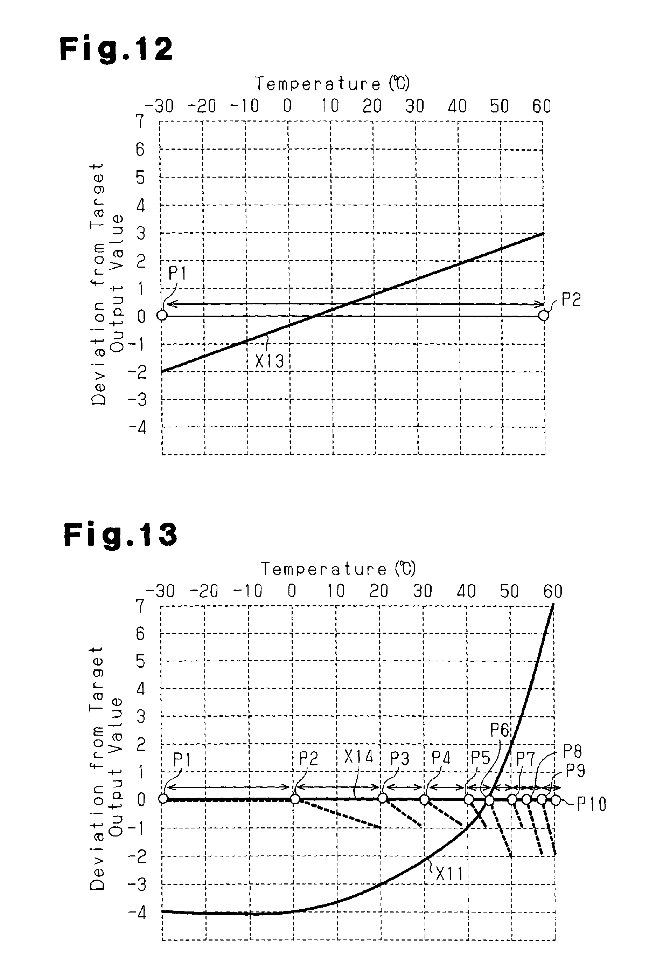

In Fig. 8, the pattern 2 corresponds to the characteristic curve X13 shown in Fig. 12. The characteristic curve X13 has a constant gradient in the temperature range of - 30 to 60°C. More specifically, the characteristic curve X13 is a straight line in this temperature range. The pattern 2 has correction points P1 and P2 that are respectively set at the two ends of this temperature range. The correction pattern map M2 sets the same gradient data for the entire temperature region of the correction pattern 2.

The operation of the sensor amplification circuit 300 having the correction pattern maps M1 and M2 will now be described.

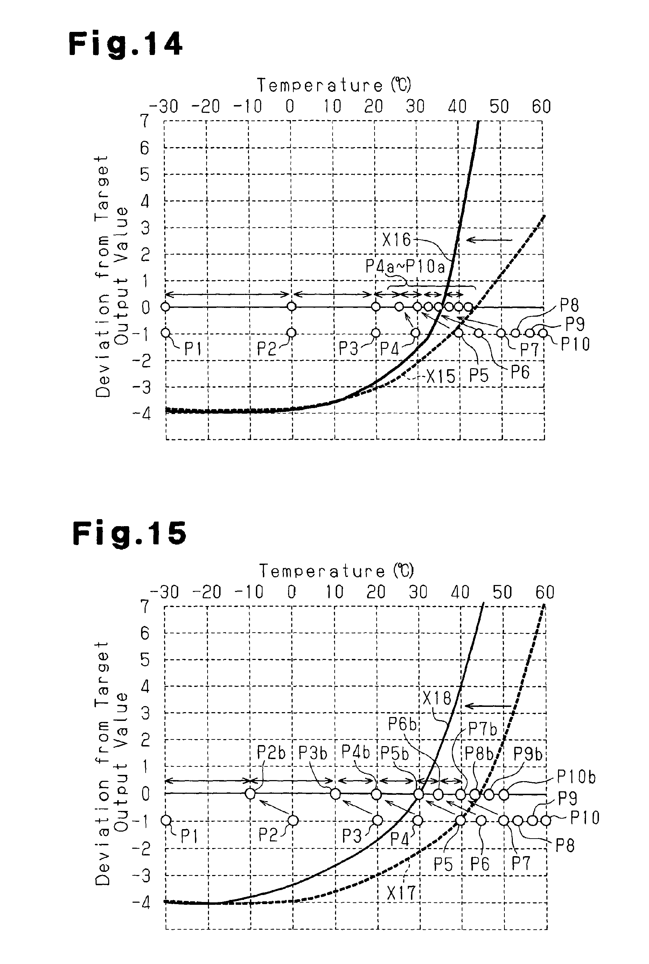

Fig. 13 is a graph showing the correction operation performed when the output voltages Vs1 and Vs2 of the sensor 1 have the characteristics shown by the characteristic curve X11. In this case, the control circuit 24 first performs setting to select the correction pattern 0. The control circuit 24 then reads the temperature regions 1 to 9 of the pattern 0 from the correction pattern map M1 stored in the memory device 25, and sets the read temperature regions. The control circuit 24 also reads correction data associated with each of the correction points P1 to P10, calculates control data for adjusting the resistances of the resistors R1a, R1b, and R2 and the voltage adjustment circuit 9 of the digital correction circuit 18, and stores the control data in the data latch unit 26.

The control circuit 24 also reads gradient data associated with each of the temperature regions from the correction pattern map M2, calculates control data for adjusting the resistances of the resistors R3 and R4 and the voltage adjustment circuit 17 of the analog correction circuit 19, and stores the control data into the data latch unit 26.

In this state, when the output voltages Vs1 and Vs2 expressed by the characteristic curve X11 are applied by the sensor 1, the digital correction circuit 18 operates to correct the characteristic curve X11 to a predetermined target output value (zero level in Fig. 13) at each of the correction points P1 to P10.

The analog correction circuit 19 operates based on the gradient data to correct the characteristic curve X11 in each of the temperature regions between the correction points P1 to P10. In Fig. 13, the gradient of the output voltage Va of the analog correction amplifier 15 adjusted based on the gradient data is indicated by dotted lines. This operation eliminates the temperature dependent characteristic from the characteristic curve X11. In this manner, the characteristic curve X11 is corrected to a characteristic curve X14, which is flat approximately at a predetermined target value with no temperature dependency. The corrected characteristic curve X14 is then output as the output signal Vout.

When the output voltages Vs1 and Vs2 of the sensor 1 have the characteristics shown by the characteristic curve X12 of Fig. 11, the control circuit 24 performs setting to select the correction pattern 1. The control circuit 24 then reads the temperature regions 1 to 13 of the pattern 1 from the correction pattern map M1 stored in the memory device 25 and sets the read temperature regions. The control circuit 24 also reads correction data associated with each of the correction points P1 to P14, calculates control data, and stores the control data into the data latch unit 26.

Further, the control circuit 24 reads the gradient data associated with each of the temperature regions of the pattern 1 from the correction pattern map M2, calculates control data, and stores the control data in the data latch unit 26.

In this state, when the output voltages Vs1 and Vs2 expressed by the characteristic curve X12 are applied by the sensor 1, the digital correction circuit 18 operates to correct the characteristic curve X12 to a predetermined target value at each of the correction points P1 to P13. Further, the analog correction circuit 19 operates based on the gradient data to correct the characteristic curve X12 in each of the temperature regions between the correction points P1 to P14.

This operation eliminates the temperature dependent characteristic from the characteristic curve X12. As a result, the characteristic curve X12 is corrected to a characteristic curve, which is flat approximately at a predetermined target value with no temperature dependency. The corrected characteristic curve is then output as the output signal Vout.

When the output voltages Vs1 and Vs2 of the sensor 1 have the characteristics shown by the characteristic curve X13 of Fig. 12, the control circuit 24 performs setting to select the correction pattern 2. The control circuit 24 then reads the temperature regions of the pattern 2 from the correction pattern map M1 stored in the memory device 25 and sets the read temperature regions. The control circuit 24 also reads correction data associated with each of the correction points P1 and P2, calculates control data, and stores the control data into the data latch unit 26.

The control circuit 24 also reads gradient data of the pattern 2 from the correction pattern map M2, calculates control data, and stores the control data into the data latch unit 26.

In this state, when the output voltages Vs1 and Vs2 expressed by the characteristic curve X13 are applied by the sensor 1, the digital correction circuit 18 and the analog correction circuit 19 operate to correct the characteristic curve X13. The corrected characteristic curve is then output as the output signal Vout.

The sensor amplification circuit 300 of the first embodiment has the advantages described below.
(1) The temperature characteristic curve of the sensor output is corrected at the correction points that are set at temperature intervals that narrow as the gradient of the temperature characteristic curve becomes steeper. This improves the correction accuracy for the temperature dependent characteristic of the sensor output.
(2) The memory device 25 prestores correction patterns for different temperature dependent characteristics of sensor outputs and performs the correction process by reading the correction pattern corresponding to the characteristic that is to be corrected. Thus, different temperature dependent characteristics of the sensor are easily corrected. The characteristic curve of the sensor 1 is corrected using one of the preset correction patterns selected in accordance with the temperature dependent characteristic of the sensor 1 without having to detect the temperature dependent characteristics of the sensor 1 individually.
(3) In the temperature regions set for each correction pattern, analog correction is performed using gradient data that is preset for the correction pattern. The gradient data is obtained easily. This improves the correction accuracy of the correction performed in each of the temperature regions.
(4) The gradient data of the temperature regions associates a steeper gradient for a temperature region defined by a narrower temperature interval. This improves the correction accuracy of the correction performed in each of the temperature regions.
(5) The temperature interval of correction points widens in temperature regions at which the gradient of the sensor output temperature characteristic is small. This reduces the number of times the correction data or the gradient data is read from the memory device 25 and the number of times the digital correction circuit 18 and the analog correction circuit 19 adjust the resistances. This prevents power supply noise of the sensor amplification circuit 300 from being generated and reduces the power consumption of the sensor amplification circuit 300.
(6) The temperature interval of correction points widens in temperature regions at which the gradient of the temperature characteristic curve is small. Further, the temperature interval of correction points narrows in temperature regions at which the gradient of the temperature characteristic curve is large. This improves the correction accuracy without increasing the total number of the correction points.

### [Second Embodiment]

Fig. 14 is a graph showing a correction operation performed by a sensor amplification circuit 300 according to a second embodiment of the present invention. In the second embodiment, the temperature regions of the preset correction patterns are finely adjusted to further improve correction accuracy.

More specifically, temperature regions of a correction pattern corresponding to the characteristic curve X15 are finely adjusted in a manner that correction points P4 to P10 are moved to correction points P4a to P10a. This generates a correction pattern corresponding to characteristic curve X16.

As a result, the correction accuracy of a sensor output having a temperature dependent characteristic differing from the temperature dependent characteristics of the preset correction patterns is improved.

### [Third Embodiment]

Fig. 15 is a graph showing a correction operation performed by a sensor amplification circuit 300 according to a third embodiment of the present invention. In the third embodiment, correction points P1 to P10 of preset correction patterns are shifted, for example, to a low-temperature side within the same temperature range to further improve correction accuracy.

More specifically, the correction points P1 to P10 of a correction pattern corresponding to the characteristic curve X17 are shifted to the low-temperature side by 10°C, that is, the correction points P1 to p10 are shifted to correction points P2b to P10b. This generates a correction pattern corresponding to characteristic curve X18.

As a result, the correction accuracy of a sensor output having a temperature dependent characteristic differing from the temperature dependent characteristics of the preset correction patterns is improved.

It should be apparent to those skilled in the art that the present invention may be embodied in many other specific forms without departing from the spirit or scope of the invention. Particularly, it should be understood that the present invention may be embodied in the following forms.

The temperature dependent characteristic may be corrected by only the digital correction performed by the digital correction circuit 18 at the correction points of the selected correction pattern. In this case, the analog correction is not performed in the regions between the correction points. Because the correction points at set at narrower temperature intervals for temperature regions in which the gradient of the temperature dependent characteristic is large, the digital correction improves correction accuracy as compared with the digital correction of the prior art.

The temperature dependent characteristic may be corrected only by the analog correction using the gradient data in the temperature regions of the selected correction pattern.

The present examples and embodiments are to be considered as illustrative and not restrictive.

## Claims

1. A method for correcting a temperature dependent characteristic of an input signal at each of a plurality of correction points set at a predetermined temperature interval with correction data for each of the correction points, the method **characterized by**:
storing a plurality of correction patterns, each including the correction points set at a temperature interval that differs between the correction patterns;
selecting a correction pattern corresponding to the temperature dependent characteristic of the input signal from the plurality of correction patterns; and
correcting the temperature dependent characteristic of the input signal with the selected correction pattern and the correction data corresponding to the selected correction pattern.

2. The method according to claim 1, **characterized in that** the temperature interval of the correction points in each of the correction patterns is set in accordance with a gradient of the temperature dependent characteristic of the input signal.

3. The method according to claim 1 or 2, **characterized in that** each of the correction patterns includes gradient data for correcting the temperature dependent characteristic between the correction points.

4. The method according to claim 3, **characterized in that** the gradient data includes a gradient of a temperature dependent characteristic corresponding to the temperature interval of the correction points.

5. The method according to any one of claims 1 to 4, further **characterized by**:
adjusting the temperature interval of the correction points in each of the correction patterns to generate a new correction pattern.

6. The method according to any one of claims 1 to 4, further **characterized by**:
shifting the temperature of each of the correction points in each of the correction patterns to generate a new correction pattern.

7. An amplification circuit (300) for a sensor, the amplification circuit comprising a correction circuit (18) for correcting a temperature dependent characteristic of an input signal at a plurality of correction points set at a predetermined temperature interval with correction data for each of the correction points, and a temperature sensor (12) for detecting ambient temperature, the amplification circuit
**characterized by**:
a memory device (25) for storing a plurality of correction patterns set in accordance with the temperature dependent characteristics of the input signal, wherein each of the correction pattern includes the correction points set at a temperature interval that differs between the correction patterns, and the memory device further stores the correction data for each of the correction points; and
a control circuit (24) for operating the correction circuit based on the correction pattern and the correction data corresponding to the ambient temperature detected by the temperature sensor.

8. The amplification circuit according to claim 7, **characterized in that** the temperature interval for each of the correction patterns stored in the memory device is set in accordance with a gradient of the temperature dependent characteristic of the input signal.

9. The amplification circuit according to claim 7 or 8, **characterized in that** each of the correction patterns stored in the memory device includes gradient data for correcting the temperature dependent characteristic between the correction points.

10. The amplification circuit according to claim 9, **characterized in that** the gradient data includes a gradient of the temperature dependent characteristic corresponding to the temperature interval of the correction points.
